# FASCICULE DE BREVET EUROPEEN

(11) **EP 2 178 752 B1**
(45) Date de publication et mention de la délivrance du brevet: **26.01.2011**
(21) Numéro de dépôt: 08828037.5
(22) Date de dépôt: 16.06.2008
(51) Int. Cl.: B64D 29/00, F01D 9/06

(54) **TRONÇON ARRIERE DE NACELLE D'AERONEF, ET NACELLE EQUIPEE D'UN TEL TRONÇON ARRIERE**
HECKTEIL EINER FLUGZEUGGONDEL UND MIT EINEM SOLCHEN HECKTEIL AUSGESTATTETE FLUGZEUGGONDEL
REAR SECTION OF AIRCRAFT NACELLE AND NACELLE EQUIPPED WITH SUCH REAR SECTION

(30) Priorité: 20.08.2007 FR 0705896
(43) Date de publication de la demande: 28.04.2010
(73) Titulaire: Aircelle, 76700 Gonfreville L'Orcher (FR)
(72) Inventeur: LECOSSAIS, Eric, F-76110 Virville (FR); LEDOCTE, Thierry, F-76620 Le Havre (FR); ROUYER, Pascal, Gérard, F-76430 Saint Romain de Colbosc (FR); CARIMALI, Félix, F-76133 Epouville (FR)
(74) Mandataire: Gaillarde, Frédéric F. Ch.
(86) Numéro de dépôt international: PCT/FR2008/000835
(87) Numéro de publication internationale: WO 2009/024657

(56) Documents cités:
- US-A- 4 679 750

## Description

La présente invention se rapporte à un tronçon arrière de nacelle d'aéronef, et à une nacelle équipée d'un tel tronçon arrière.

On connaît de la technique antérieure un tronçon arrière de nacelle d'aéronef formé de deux moitiés définissant :
- une partie centrale destinée à recevoir un turboréacteur,
- une veine annulaire d'air froid disposée autour de ladite partie centrale, et
- au moins une cavité six heures disposée sous ladite partie centrale. Document US 4 679 750, qui est considéré comme l'état de la technique la plus proche, montre un tel tronçon.

Dans un tel dispositif de la technique antérieure, la cavité six heures, dont le nom provient de sa position sur la section circulaire du tronçon de nacelle (par analogie aux positions des aiguilles sur le cadran d'une montre), est destinée à accueillir différentes canalisations et câbles électriques destinés au fonctionnement du turboréacteur et de la nacelle.

En raison de la proximité du turboréacteur avec cette cavité six heures, les températures à l'intérieur de cette cavité peuvent atteindre des valeurs très élevées.

Ceci est très gênant pour les organes situés à l'intérieur de cette cavité, et notamment pour les câbles électriques, dont l'exposition à la chaleur peut conduire à de graves dysfonctionnements, voire à un incendie.

La présente invention a notamment pour but de remédier à ces inconvénients.

On atteint ce but de l'invention avec un tronçon arrière de nacelle d'aéronef formé de deux moitiés définissant :
- une partie centrale destinée à recevoir un turboréacteur,
- une veine annulaire d'air froid disposée autour de ladite partie centrale, et
- au moins une cavité six heures disposée sous ladite partie centrale,
remarquable en ce qu'il comprend au moins une conduite mettant en communication de fluide ladite veine annulaire avec ladite cavité six heures.

Grâce à la présence de cette conduite, on peut prélever de l'air froid dans la veine annulaire d'air froid et amener cet air froid dans la cavité six heures.

Cet air froid permet de compenser les fuites d'air de l'intérieur de la cavité six heures vers l'extérieur, et de porter cette cavité à une pression supérieure à celle régnant dans la partie centrale où se trouve le turboréacteur.

Du fait de cette pression supérieure, l'ai chaud engendré par le turboréacteur ne s'échappe plus vers la cavité six heures, notamment par la ligne de jointure entre les deux moitiés du tronçon arrière de nacelle, comme c'est le cas dans la technique antérieure.

Ainsi, la température à l'intérieur de la cavité six heures peut être maintenue dans une fourchette relativement basse, compatible avec les spécifications thermiques des différents organes (conduites, câbles) situés à l'intérieur de cette cavité.

Suivant d'autres caractéristiques optionnelles de ce tronçon arrière de nacelle:
- ce tronçon comprend une conduite sur chacune desdites moitiés : cette disposition particulière permet d'amener une quantité d'air froid importante dans la cavité six heures ;
- ladite conduite traverse un panneau de la structure interne de ce tronçon : cet agencement présente l'avantage de la simplicité car il ne nécessite aucune modification importante d'un tronçon arrière de nacelle existant ;
- ce tronçon comprend au moins un verrou reliant lesdites moitiés et disposé entre ladite partie centrale et ladite cavité six heures : un tel verrou est nécessaire pour contribuer à la fixation des deux moitiés de tronçon l'une à l'autre ; du fait de la surpression existant à l'intérieur de la cavité six heures, ce verrou n'est plus soumis à une circulation d'air chaud préjudiciable à la pérennité des pièces qui le composent ;
- ladite cavité six heures comprend au moins une porte de surpression : une telle porte est conçue pour s'ouvrir en cas d'explosion d'une conduite notamment d'air comprimé située dans la cavité six heures ; du fait de l'arrivée d'air froid dans cette cavité, les fuites d'air vers l'extérieur ayant lieu à la périphérie de cette porte, sont compensées ;
- ladite cavité comprend des pare-feu ;
- ce tronçon arrière comprend des moyens d'inversion de poussée ;
- lesdits moyens d'inversion de poussée sont du type à grilles.

La présente invention se rapporte également à une nacelle d'aéronef, remarquable en ce qu'elle comprend un tronçon arrière conforme à ce qui précède.

D'autres caractéristiques et avantages de la présente invention apparaîtront à la lumière de la description qui va suivre et à l'examen des figures ci-annexées dans lesquelles :
- la figure 1 représente en perspective une nacelle selon l'invention, équipée d'un tronçon arrière selon l'invention,
- la figure 2 représente une vue en coupe transversale de la zone de la nacelle de la figure 1 indiquée par la flèche II de cette figure, et
- la figure 3 représente une vue à plus grande échelle de la zone III de la figure 2.

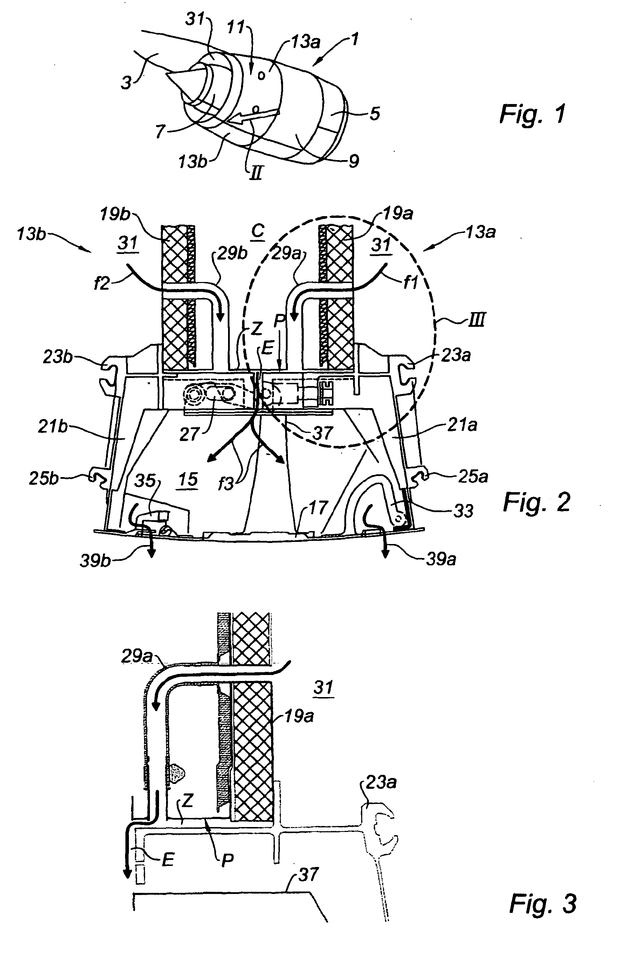

En se reportant à la figure 1, on peut voir une nacelle 1 selon l'invention, fixée à un mât 3 destiné à être monté sous une aile d'aéronef (non représentée).

Comme cela est connu en soi, la nacelle 1 comporte un tronçon avant 5 permettant de canaliser l'air extérieur vers le turboréacteur 7 situé à l'intérieur de la nacelle 1, un tronçon intermédiaire 9 entourant une soufflante (non visible) et un tronçon arrière 11 disposé autour du turboréacteur 7.

Le tronçon arrière 11 est formé de deux moitiés 13a, 13b, susceptibles de s'écarter l'une de l'autre pour les opérations de maintenance.

Dans la zone inférieure de jointure des deux moitiés 13a, 13b, indiquée par la flèche II, se trouve une cavité 15 visible sur la figure II, dite « cavité six heures », fermée par une porte 17.

En se reportant plus particulièrement à la figure 2, on remarque que chaque moitié 13a, 13b de tronçon arrière 11 comporte un panneau de structure interne 19a, 19b fixé sur une poutre inférieure 21a, 21b, chaque poutre inférieure supportant un rail primaire 23a, 23b et un rail secondaire 25a, 25b destinés à recevoir un capot coulissant d'inversion de poussée (non représenté).

Les moitiés 13a, 13b du tronçon arrière 11 de la nacelle 1 sont solidarisées entre elles notamment par un verrou 27 dont les deux moitiés complémentaires sont montées respectivement sur les poutres 21 a et 21 b.

L'espace E situé à la jointure des deux poutres 21 a, 21 b autorise le passage d'un filet d'air.

De même, les bords périphériques de la porte 17 coopèrent de manière non complètement étanche avec des parties fixes solidaires respectivement des poutres 21 a et 21 b.

Des conduites 29a et 29b traversent respectivement les parois fixes 19a et 19b, et débouchent chacune d'une part dans la veine d'air froid 31 de la nacelle et d'autre part dans une zone Z délimitée par une paroi P, cette zone communiquant avec l'espace E défini par les deux poutres 21 a, 21 b.

La porte 17 est une porte de surpression, c'est-à-dire une porte apte à s'ouvrir au cas où une conduite notamment d'air comprimé disposée à l'intérieur de la cavité 15 viendrait à exploser.

Cette porte est montée pivotante sur la poutre 21 a au moyen d'une charnière à col de cygne 33, et elle comporte un ou plusieurs verrous calibrés 35 coopérant avec l'autre poutre 21b.

De plus; comme cela est classique, des organes pare-feu 37 sont disposés à l'intérieur de la cavité 15.

Le mode de fonctionnement et les avantages du dispositif selon l'invention résultent directement de la description qui précède.

Lorsque le turboréacteur 7 est en fonctionnement, il dégage une chaleur très importante dans la partie centrale C située entre les parois fixes 19a et 19b.

Cette chaleur très importante a naturellement tendance à s'échapper par l'espace E vers la cavité 15 puis vers l'extérieur, en raison notamment du fait que l'étanchéité de la porte 17 n'est pas parfaite.

En prélevant de l'air froid circulant dans la veine annulaire 31 et en dirigeant cet air froid vers l'espace E au moyen des conduites 29a, 29b, on peut remplir la cavité 15 d'air froid à une pression supérieure à celle régnant dans la zone centrale C.

Ce flux d'air froid est matérialisé par les flèches f1, f2, f3 visibles sur les figures 2 et 3.

Cette surpression de la cavité 15 peut être obtenue malgré une certaine déperdition d'air froid vers l'extérieur à la périphérie de la porte 17 (voir les flèches 39a, 39b).

Du fait de la surpression de la cavité six heures 15 par rapport à la partie centrale C, l'air chaud engendré par le turboréacteur 7 rencontre une barrière de pression l'empêchant de migrer en direction de la cavité 15.

On peut de la sorte maintenir cette cavité 15 ainsi que l'ensemble des organes qui s'y trouvent à une température relativement basse, ce qui évite toute détérioration de ces organes.

Ceci est vrai également pour le ou les verrous 27 qui se trouvent exposés à des températures nettement plus faibles que dans les dispositifs de la technique antérieure.

Les préceptes de l'invention peuvent s'appliquer à un tronçon arrière de nacelle à inverseur de poussée à grilles, comme dans le cas exposé ci-dessus, mais également et de manière plus générale à un tronçon arrière de nacelle équipé d'un inverseur de poussée à portes, voire à un tronçon arrière de nacelle dépourvu d'inverseur de poussée.

On notera que l'on pourrait également prévoir une pluralité de conduites 29 installées sur chaque moitié du tronçon arrière de nacelle.

L'invention n'est nullement limitée au mode de réalisation décrit et représenté ci-avant, fourni à titre de simple exemple.

C'est ainsi par exemple que l'on pourrait prévoir que les conduites 29 comportent un partie s'étendant à l'intérieur de la veine d'air froid 31, cette partie étant alors munie d'une pluralité d'orifices (à la manière d'un tube piccolo) permettant la collecte d'air froid.

## Revendications

1. Tronçon arrière (11) de nacelle d'aéronef formé de deux moitiés (13a, 13b) définissant:
- une partie centrale (C) destinée à recevoir un turboréacteur (7),
- une veine annulaire d'air froid (31) disposée autour de ladite partie centrale (C), et
- au moins une cavité six heures (15) disposée sous ladite partie centrale (C),
**caractérisé en ce qu'**il comprend au moins une conduite (29a, 29b) mettant en communication de fluide ladite veine annulaire (31) avec ladite cavité six heures (15).

2. Tronçon arrière (11) selon la revendication 1, **caractérisé en ce qu'**il comprend une dite conduite (29a, 29b) sur chacune desdites moitiés (13a, 13b).

3. Tronçon arrière (11) selon l'une des revendications 1 ou 2, **caractérisé en ce que** ladite conduite (29a, 29b) traverse un panneau (19a, 19b) de la structure interne dudit tronçon (11).

4. Tronçon arrière (11) selon l'une quelconque des revendications précédentes, **caractérisé en ce qu'**il comprend au moins un verrou (27) reliant lesdites moitiés (13a, 13b) et disposé entre ladite partie centrale (C) et ladite cavité six heures (15).

5. Tronçon arrière (11) selon l'une quelconque des revendications 1 à 4, **caractérisé en ce que** ladite cavité six heures (15) comprend au moins une porte de surpression (17).

6. Tronçon arrière (11) selon l'une quelconque des revendications précédentes, **caractérisé en ce que** ladite cavité comprend des pare-feu (37).

7. Tronçon arrière (11) selon l'une quelconque des revendications précédentes, **caractérisé en ce qu'**il comprend des moyens d'inversion de poussée.

8. Tronçon arrière (11) selon la revendication 7, **caractérisé en ce que** lesdits moyens d'inversion de poussée sont du type à grilles.

9. Nacelle d'aéronef (1), **caractérisée en ce qu'**elle comprend un tronçon arrière (11) conforme à l'une quelconque des revendications précédentes.

## Claims

1. . A rear section (11) of an aircraft nacelle form with two halves (13a, 13b) defining:
- a central portion (C) intended to receive a turbojet engine (7),
- an annular cold air vein space (31) arranged around said central portion (C), and
- at least one six-hour cavity (15) arranged under said central portion (C),
**characterised in that** it comprises at least one duct (29a, 29b) putting said the annular vein (21) in fluidic communication with said six-hour cavity (15).

2. . The rear section (11) according to claim 1, are **characterized in that** it comprises a so-called duct (29a, 29b) on each of said halves (13a, 13b).

3. . The rear section (11) according to any of claims 1 or 2, **characterized in that** said duct (29a, 29b) crosses a panel (19a, 19b) of the internal structure of said section (11).

4. . The rear section (11) according to any of the preceding claims, **characterized in that** it comprises at least one lock (27) connecting said halves (13a, 13b) and arranged between said central portion (C) and said six-hour cavity (15).

5. . The rear section (11) according to any of claims 1 to 4, **characterized in that** said six-hour cavity (15) comprises at least one overpressure gate (17).

6. . The rear section (11) according to any of the preceding claims, **characterized in that** said cavity comprises firewalls (37).

7. . The rear section (11) according to any of the preceding claims, **characterized in that** it comprises thrust-inversion means.

8. . The rear section (11) according to claim 7, **characterized in that** said thrust-inversion means are of the grid type.

9. . An aircraft nacelle (1) **characterised in that** it comprises a rear section (11) in accordance with any of the preceding claims.

## Patentansprüche

1. Hinterer Abschnitt (11) eines Luftfahrzeugtriebwerksrumpfs, der von zwei Hälften (13a, 13b) gebildet wird, die definieren:
- einen mittleren Teil (C), der zur Aufnahme eines Turbotriebwerks (7) bestimmt ist,
- eine ringförmige Kaltluftader (31), die um den mittleren Teil (C) angeordnet ist, und
- mindestens einen Hohlraum bei sechs Uhr (15), der unter dem mittleren Teil (C) angeordnet ist,
**dadurch gekennzeichnet, dass** er mindestens eine Leitung (29a, 29b) besitzt, die die ringförmige Ader (31) mit dem Hohlraum bei sechs Uhr (15) in Fluidkommunikation versetzt.

2. Hinterer Abschnitt (11) nach Anspruch 1, **dadurch gekennzeichnet, dass** er eine Leitung (29a, 29b) über jeder der Hälften (13a, 13b) umfasst.

3. Hinterer Abschnitt (11) nach einem der Ansprüche 1 oder 2, **dadurch gekennzeichnet, dass** die Leitung (29a, 29b) eine Wand (19a, 19b) der inneren Struktur des Abschnitts (11) durchquert.

4. Hinterer Abschnitt (11) nach einem der vorangehenden Ansprüche, **dadurch gekennzeichnet, dass** er mindestens einen Riegel (27) umfasst, der die Hälften (13a, 13b) verbindet und zwischen dem mittleren Teil (C) und dem Hohlraum bei sechs Uhr (15) angeordnet ist.

5. Hinterer Abschnitt (11) nach einem der Ansprüche 1 bis 4, **dadurch gekennzeichnet, dass** der Hohlraum bei sechs Uhr (15) mindestens eine Überdrucktür (17) umfasst.

6. Hinterer Abschnitt (11) nach einem der vorangehenden Ansprüche, **dadurch gekennzeichnet, dass** der Hohlraum Feuerschutzvorrichtungen (37) umfasst.

7. Hinterer Abschnitt (11) nach einem der vorangehenden Ansprüche, **dadurch gekennzeichnet, dass** er Schubumkehrmittel umfasst.

8. Hinterer Abschnitt (11) nach Anspruch 7, **dadurch gekennzeichnet, dass** die Schubumkehrmittel vom Typ mit Gittern sind.

9. Luftfahrzeugtriebwerksrumpf (1), **dadurch gekennzeichnet, dass** er einen hinteren Abschnitt (11) nach einem der vorangehenden Ansprüche umfasst.
